# EUROPEAN PATENT SPECIFICATION

(11) **EP 2 680 952 B1**
(45) Date of publication and mention of the grant of the patent: **11.07.2018**
(21) Application number: 11709221.3
(22) Date of filing: 07.02.2011
(51) Int. Cl.: B01D 53/94, B01J 23/66, B01J 23/89, B01J 37/03, B01J 35/00, B82Y 30/00, B01J 37/02

(54) **NOX PURIFICATION CATALYST**
NOX-REINIGUNGSKATALYSATOR
CATALYSEUR DE PURIFICATION DE NOX

(43) Date of publication of application: 08.01.2014
(73) Proprietor: Toyota Jidosha Kabushiki Kaisha, Toyota-shi, Aichi 471-8571 (JP); Cambridge Enterprise Limited, Trinity Lane Cambridge Cambridgeshire CB2 1TN (GB)
(72) Inventor: OSAKI, Mayuko, Toyota-shi Aichi 471-8571 (JP); HIRATA, Hirohito, Toyota-shi Aichi 471-8571 (JP); HARA, Naoyuki, Toyota-shi Aichi 471-8571 (JP); JOHNSON, Brian, Cambridge Cambridgeshire CB2 1TN (GB); WHEATLEY, Andrew, Cambridge Cambridgeshire CB2 1TN (GB); SKELTON, Helen, Bedfordshire LU1 4BP (GB); LEPAGE, Muriel, B-1930 Zaventem (BE)
(74) Representative: J A Kemp
(86) International application number: PCT/JP2011/052975
(87) International publication number: WO 2012/108061

(56) References cited:
- EP-A1- 1 378 290
- EP-A1- 2 177 267
- JP-A- 10 216 518
- US-A1- 2003 060 655
- US-A1- 2007 166 220

## Description

### BACKGROUND OF THE INVENTION

### 1. Field of the Invention

The present invention relates to a nitrogen oxides (below, sometimes abbreviated as "NOₓ") purification catalyst, more particularly relates to the use of a NOₓ purification catalyst including gold atoms and nickel atoms in a solid to purify NOₓ at a low temperature and/or in an oxidizing atmosphere.

### 2. Description of the Related Art

In recent years, from the viewpoint of protection of the global environment, exhaust gas regulations have been toughened around the world with each passing year. As one means for dealing with this, in internal combustion engines, exhaust gas purification catalysts are being used. In such exhaust gas purification catalysts, in order to efficiently remove HC (hydrocarbons), carbon monoxide (CO), and NOₓ in the exhaust gas, platinum, gold, rhodium, and other precious metals have been used as catalyst ingredients.

In motor vehicles using such purification catalysts, for example gasoline engine vehicles and diesel engine vehicles, various systems are being used to improve the catalytic activity and the fuel economy. For example, for improving fuel economy during steady state operation fuel is being burned under conditions of a lean (excess oxygen) air-fuel ratio (A/F), while to improve the catalytic activity, fuel is burned under temporarily stoichiometric (stoichiometric air-fuel ratio, A/F=14.7) to rich (excess fuel) conditions.

These conditions apply because conventionally known platinum, gold, rhodium, and other precious metal catalysts exhibit low NOₓ purification performances at low temperature and under oxidizing conditions. To improve the purification performance, the purification catalyst has presently to be operated high in temperature and HC or CO etc. has to be added to establish a reducing atmosphere. Therefore, even during steady state operation, it is not possible to increase the air-fuel ratio (A/F). With the above precious metal catalysts, there is therefore a limit to the possible improvement of the fuel economy.

In such conventionally known precious metal catalysts, to obtain good purification performance, energy for raising the purification catalysts to a high temperature, fuel for temporarily exposing the purification catalysts to a reducing atmosphere, and reduction of the air-fuel ratio (A/F) in the engine are all required. To improve the fuel economy in automobile engines and other internal combustion engines, therefore, a new purification catalyst able to exhibit a good NOₓ purification performance at a low temperature and/or in an oxidizing atmosphere is being sought.

Furthermore, all of the above precious metal catalysts face the problem of resource depletion. NOₓ purification catalysts using other metals to obtain purification performances equal to or better than those of conventional precious metal catalysts or able to reduce the amounts of the precious metals used are therefore being sought.

For example, Japanese Patent Publication (A) No. 10-216518 describes a gold alloy catalyst comprised of gold and one or more metals (M) selected from platinum, palladium, silver, copper, and nickel, having a weight ratio Au/M of 1/9 to 9/1, and having an amount of solute gold in the alloy of 20 to 80 wt%. Further, the specific catalysts discussed in this publication incorporate an alloy of gold and another metal (palladium or platinum) on an Al₂O₃ carrier. These exhibit a high NOₓ purification performance in a reducing atmosphere, but have a low NOₓ purification performance at a low temperature and/or in an oxidizing atmosphere.

Further, Japanese Patent Publication (A) No. 10-216519 describes a metal particulate-carrying oxide catalyst produced by heat treating a metal compound composed of one or more elements selected from gold, platinum, palladium, rhodium, silver, iridium, ruthenium, and osmium and one or more elements selected from metals of strontium, niobium, lithium, lanthanum, aluminum, silicon, magnesium, calcium, barium, cerium, neodymium, titanium, iron, cobalt, nickel, copper, zinc, zirconium, vanadium, tantalum, chromium, molybdenum, tungsten, sodium, potassium, beryllium, scandium, yttrium, indium, tin, lead, and bismuth in an atmosphere containing oxygen. Further, the catalysts shown as specific examples in this publication are catalysts composed of a gold alloy incorporating strontium or lanthanum on an Al₂O₃ carrier. They exhibit a relatively high NOₓ purification performance in a reducing atmosphere, but have an extremely low NOₓ purification performance at a low temperature and/or in an oxidizing atmosphere.

Further, Japanese Patent Publication (A) No. 2001-239161 describes a low temperature harmful gas-purification catalyst comprised of a metal oxide on carbonaceous material carrier using high temperature/high pressure fluid to carry ultrafine particles of at least one type of metal selected from the group comprising platinum, palladium, rhodium, ruthenium, iridium, osmium, gold, silver, copper, manganese, iron, and nickel. Further, the catalysts shown as specific examples in this publication are purification catalysts supporting one of platinum, palladium, rhodium, ruthenium, nickel, or gold. They exhibit a good NOₓ purification performance in a reducing atmosphere.

Furthermore, Japanese Patent Publication (A) No. 2003-190787 describes an engine exhaust gas purification catalyst mainly comprised of 12CaO·7Al₂O₃ and carrying one or more elements selected from gold, silver, iron, zinc, manganese, cerium, and platinum group elements. Further, this publication shows, as specific examples, that purification catalysts mainly comprised of 12CaO·7Al₂O₃ carrying one element out of element of gold, silver, platinum, palladium, copper, iron, zinc, manganese, cerium, or rhodium or two elements out of elements of silver and rhodium, ruthenium, or copper fired at 600°C exhibit the effect of reducing the combustion temperature by the oxidation reaction of the particulate matter (PM) by oxygen radicals. However, this publication does not prescribe the positional relationship of the two types of metals. It is unclear if the catalysts shown as specific examples in this publication exhibit an NOₓ purification performance.

As related art, therefore, there are the above Japanese Patent Publication (A) No. 10-216518, Japanese Patent Publication (A) No. 10-216519, Japanese Patent Publication (A) No. 2001-239161, and Japanese Patent Publication (A) No. 2003-190787.

### SUMMARY OF THE INVENTION

Therefore, in these known purification catalysts, it was difficult to reduce the amount of precious metal used and obtain good NOₓ purification performance at a low temperature and/or in an oxidizing atmosphere.

Therefore, an object of the present invention is to provide the use as a NOₓ purification catalyst of a catalyst able to reduce the amount of precious metal used and whilst exhibiting a good NOₓ purification performance at a low temperature and/or in an oxidizing atmosphere.

The inventors engaged in intensive research for the purpose of realizing the above object and as a result have discovered that the decomposition of NOₓ is comprised of the disassociative adsorption of NOₓ followed by the desorption of N₂ and O₂ and that a material with a low N₂ desorption temperature and O₂ desorption- temperature, in particular a low O₂ desorption temperature, may offer a high NOₓ purification performance. This discovery has led the inventors to engage in further studies and to complete the present invention.

The present invention relates to the use as a nitrogen oxide purification catalyst of a catalyst including gold atoms and nickel atoms in a solid and in a state of close proximity.

According to the present invention, it is possible to use a catalyst that uses less precious metal and exhibits a good NOₓ purification performance at a low temperature and/or in an oxidizing atmosphere.

### BRIEF DESCRIPTION OF THE DRAWINGS

These and other objects and features of the present invention will become clearer from the following description of the preferred embodiments given with reference to the attached drawings, wherein:
FIG. 1A is a TEM image of AuNi (Au:Ni=50:50) nanoparticles of an AuNi/Al₂O₃-based NOₓ purification catalyst used in an example of the invention;
FIG. 1B is a TEM image changing the above scale;
FIG. 1C is a TEM image further changing the above scale;
FIG. 2A is a TEM image of AuNi (Au:Ni=50:50) nanoparticles of an AuNi/SiO₂-based NOₓ purification catalyst used in an example of the invention;
FIG. 2B is a TEM image changing the above scale;
FIG. 3 is one example of histogram showing the particle size distribution of 100 nanoparticles in an HRTEM image obtained for AuNi (Au:Ni=50:50) nanoparticles of an AuNi/Al₂O₃-based NOₓ purification catalyst used in an example of the invention;
FIG. 4 is a distribution histogram showing the particle size distribution of 100 nanoparticles in an HRTEM image obtained for AuNi (Au:Ni=50:50) nanoparticles of an AuNi/SiO₂-based NOₓ purification catalyst used in an example of the invention;
FIG. 5 is a TEM-EDS spectrum of AuNi (Au:Ni=50:50) nanoparticles of an AuNi/Al₂O₃-based NOₓ purification catalyst used in an example of the invention;
FIG. 6 is a TEM-EDS spectrum of AuNi (Au:Ni=50:50) nanoparticles of an AuNi/SiO₂-based NOₓ purification catalyst used in an example of the invention;
FIG. 7 is a graph showing a comparison of the NO-CO catalytic activity of an AuNi/Al₂O₃-based NOₓ purification catalyst used in an example of the invention and NOₓ purification catalysts outside of the scope of the present invention;
FIG. 8 is a graph showing a comparison of the NO purification characteristics of NOₓ purification catalysts used as an invention example with NOₓ purification catalysts outside the range of the invention;
FIG. 9 is a graph showing a comparison of the NO purification characteristics of NOₓ purification catalysts used as an invention example with NOₓ purification catalysts outside the range of the invention;
FIG. 10 shows the N1s region of an XPS spectrum obtained after the adsorption of NO at 1 Langmuir and room temperature onto NOₓ purification catalysts used as examples of the invention and also shows the activity of a catalyst outside the range of the invention for comparison;
FIG. 11 is a graph showing a comparison of the NO-H₂ catalytic activity of an AuNi/SiO₂-based NOₓ purification catalyst used as an example of the invention and NOₓ purification catalysts outside the scope of the present invention;
FIG. 12 is a schematic view showing an example of the production of a bimetal thin film NOₓ purification catalyst;
FIG. 13 is showing the possible states of NO adsorption, as observed by in situ XPS for a bimetal thin film NOₓ purification catalyst;
FIG. 14 shows the N1s region of an XPS spectrum obtained after the adsorption of NO at 1 Langmuir and room temperature onto a bimetal thin film NOₓ purification catalyst and also shows the activity of catalyst thin films for comparison;
FIG. 15 is a bar graph showing the NO dissociation and O₂ and N₂ desorption temperatures (under high vacuum) on/from a bimetal thin film NOₓ purification catalyst for metal thin film NOₓ purification catalysts and also for metal thin films;
FIG. 16 is a graph showing the relationship between the NO dissociation temperature and the surface concentration ratio for a thin film surface in an AuNi bimetal thin film NOₓ purification catalyst and also for an AuFe bimetal thin film NOₓ purification catalyst;
FIG. 17 is a schematic view showing the principle of desorption of O₂ and N₂ from gold and nickel metal atoms on a support following NO adsorption and decomposition;
FIG. 18 is a schematic that explains the mechanism of action of an Au-Ni bimetal thin film in an NOₓ purification catalyst;
FIG. 19 is a schematic view for explaining the mechanism of action of catalyst performance by an Au-Fe bimetal thin film in an NOₓ purification catalyst outside the scope of the present invention;
FIG. 20 is a schematic view showing one example of the positional relationship of gold atoms and nickel atoms in a material in which the ratio of the two atoms is Au:Ni=50:50.
FIG. 21 is a schematic view showing one example of the positional relationship of gold atoms and nickel atoms in a material in which the ratio of the two atoms is Au:Ni=67:33.
FIG. 22 is a schematic view showing one example of the positional relationship of gold atoms and nickel atoms in a material in which the ratio of the two atoms is Au:Ni=17:83;
FIG. 23 is a graph showing a comparison of the NO purification characteristics of NOₓ purification catalysts used as an invention example with NOₓ purification catalysts outside the range of the invention;
FIG. 24 shows the X-ray diffraction of AuNi/SiO₂-based NOₓ purification catalysts used as an example of the invention and NOₓ purification catalysts outside the scope of the present invention.

### DESCRIPTION OF THE PREFERRED EMBODIMENTS

The NOₓ purification catalyst used in the present invention has to include gold atoms and nickel atoms in a solid and a state of close proximity.

The expression "gold atoms and nickel atoms in a solid and a state of close proximity" means a state in which at least one of the gold atoms is contiguous with at least one of the nickel atoms in primary particles that are nanoparticles.

Below, referring to the drawings, embodiments of the present invention will be explained in detail.

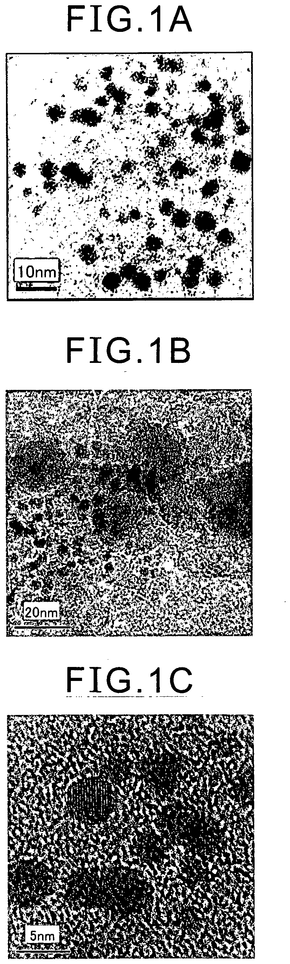

Referring to FIG. 1A, FIG. 1B, and FIG. 1C, a NOₓ purification catalyst used in an example of the invention is comprised of, as one example of a support carrier, Al₂O₃ carrier particles, on which are supported nanoparticles of Au-Ni(50:50) bimetal particles with a mean particle size of 3.76±0.76 nm in which gold atoms and nickel atoms are present in Au:Ni=50:50 and a state of close proximity.

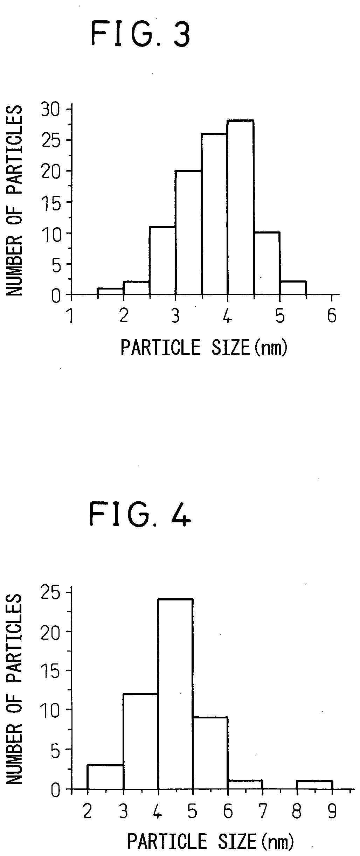

Referring to FIG. 3, it is shown that the particle size distribution for 100 nanoparticles in an HRTEM Multiple images strictly speaking of this NOₓ purification catalyst is in the range of 1.5 to 5.5 nm.

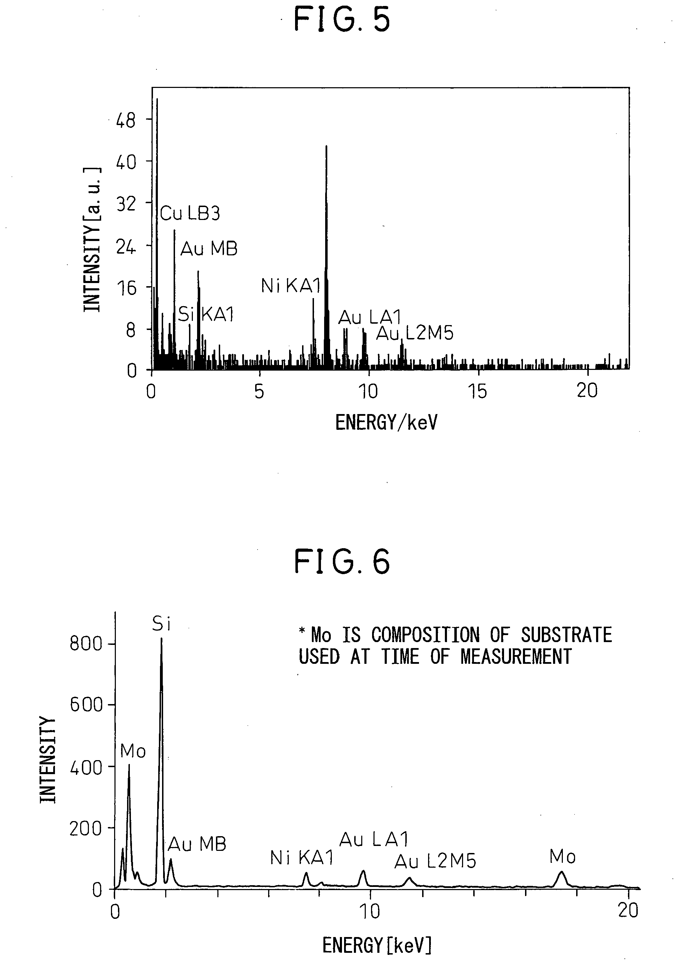

FIG. 5 shows the TEM-EDS spectrum of the AuNi (Au:Ni=50:50) bimetal and core-shell particles of the NOₓ purification catalyst on a Cu coated grid.

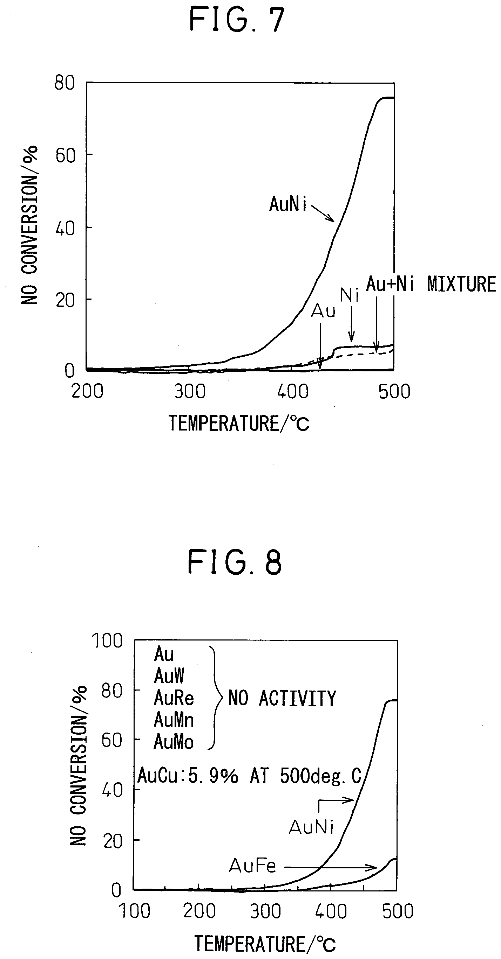

From FIG. 7, it is shown that the NOₓ purification catalyst comprised of Al₂O₃ on which Au-Ni alloy particles are carried according to an embodiment of present invention has a higher NO-CO catalytic activity in a range of 300 to 500°C as compared with NOₓ purification catalysts that are outside the scope of the present invention and are comprised of Al₂O₃ carriers on which nickel alone, gold alone, or a simple mixture of gold and nickel are supported. Moreover, the bimetallic example of the invention can be seen to have a particularly high NO-CO catalytic activity at a temperature of about 425°C and above. Further, with a simple mixture where, even when using gold and nickel together, the two types of atom cannot be present in close proximity, the NO-CO catalytic activity at 500°C is even lower than that recorded for nickel alone.

According to FIG. 8, among the NOₓ purification catalysts comprised of Al₂O₃ on which a bimetal is supported, an AuNi-based NOₓ purification catalyst that represents an embodiment of the present invention exhibits a higher NO conversion rate at temperatures in the range 350 to 500°C as compared with an AuFe-based NOₓ purification catalyst that is outside the range of the present invention. Further, Au-, AuW-, AuRe-, AuMn-, AuMo-, and AuCu(Cu:5.9%)-based NOₓ purification catalysts (all outside the range of the invention) all showed NO conversion rates at 500°C of 0%. This observation clearly demonstrates that the AuNi-based NOₓ purification catalyst demonstrates special properties.

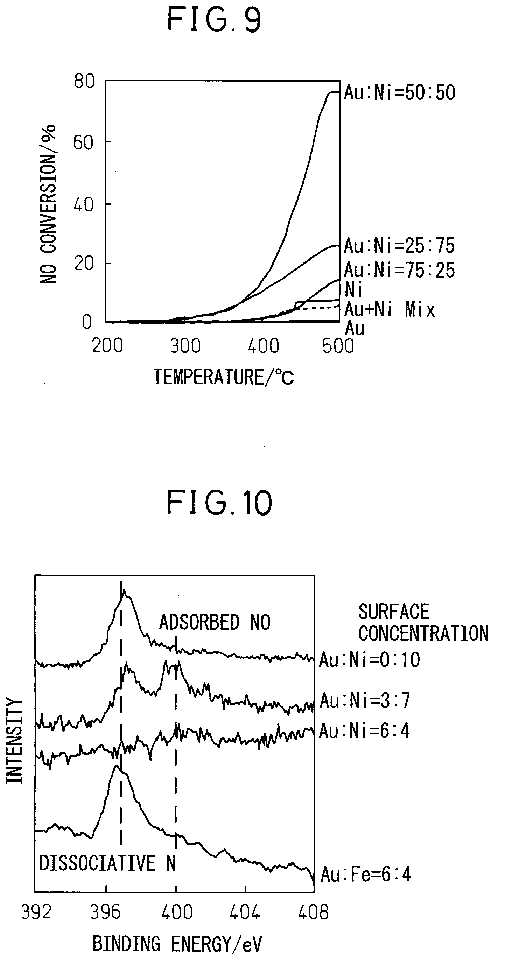

Referring to FIG. 9, NOₓ purification catalysts comprised of Al₂O₃ support on which are supported Au-Ni nanoparticles comprised of gold atoms and nickel atoms alloyed in Au:Ni=50:50, 25:75, and 75:25 and present in a state of close proximity all exhibit good NO purification characteristics at temperatures of approximately 425°C or more. Among these examples of the invention, Au:Ni=50:50 exhibits the highest NO conversion rate. After that, Au:Ni=25:75 and Au:Ni=75:25, in that order, have lower NO conversion. As opposed to this, it can be seen that NOₓ purification catalysts supporting nanoparticles of nickel or gold alone or a simple mixture of gold and nickel on Al₂O₃ carriers only exhibit relatively low NO conversion or even at 500°C.

From FIG. 10 it can be understood that an AuNi nanoparticle-based NOₓ purification catalyst comprised of an Al₂O₃ carrier on which gold atoms and nickel atoms are present in Au:Ni=6:4 and are in a state of close proximity presents different NO dissociative adsorption characteristic to those of a NOₓ purification catalysts that are outside of the scope of the present invention.

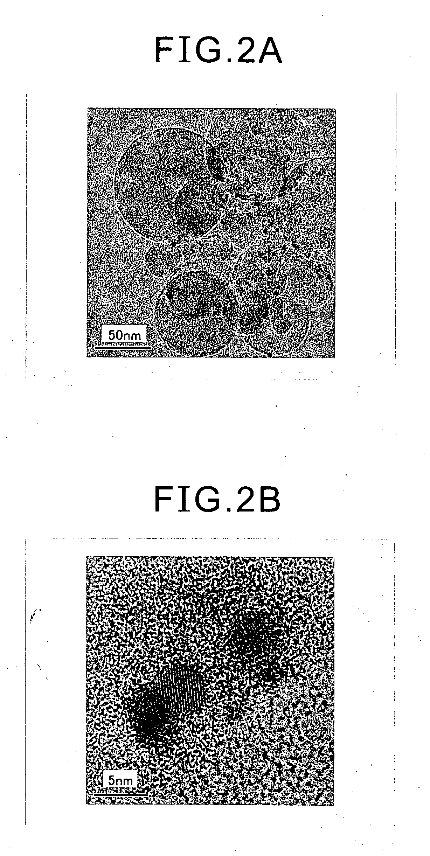

Referring to FIG. 2A, FIG. 2B, and FIG. 4, it can be seen that an example of the invention in which an AuNi (50:50) bimetal particle-based NOₓ purification catalyst is comprised of an SiO₂ carrier on which gold atoms and nickel atoms are present in Au:Ni=50:50 and a state of close proximity reveals nanoparticles of a mean particle size of 4.37+/-0.97 nm and particle size distribution in the range of 2 to 9 nm.

Referring to FIG. 6, it is confirmed by the TEM-EDS spectrum that AuNi bimetal particles supported on SiO₂ (Au:Ni=58:42) include both gold and nickel of the metals.

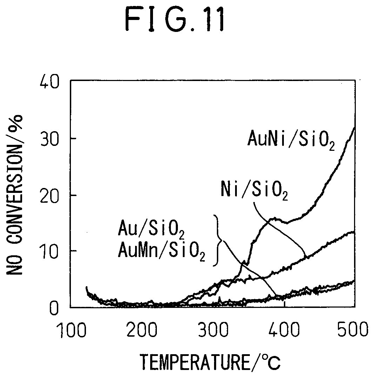

From FIG. 11 it can be seen that an example of the present invention in which an NOₓ purification catalyst is comprised of SiO₂ supporting AuNi bimetal particles exhibits a higher N0-H₂ catalytic activity in the range of 350 to 500°C compared with NOₓ purification catalysts outside the scope of the present invention comprising SiO₂ carriers on which nickel alone, gold alone, or an AuMn alloy are supported.

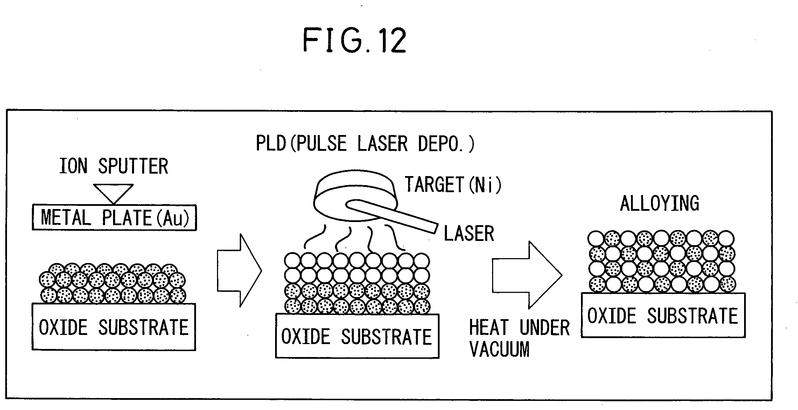

From FIG. 12 it can be seen that an NOₓ purification catalyst not according to the embodiments of the present invention can be obtained as an AuNi bimetal thin film/oxide carrier by heat treating a multilayer thin film of gold and nickel on an oxide carrier substrate.

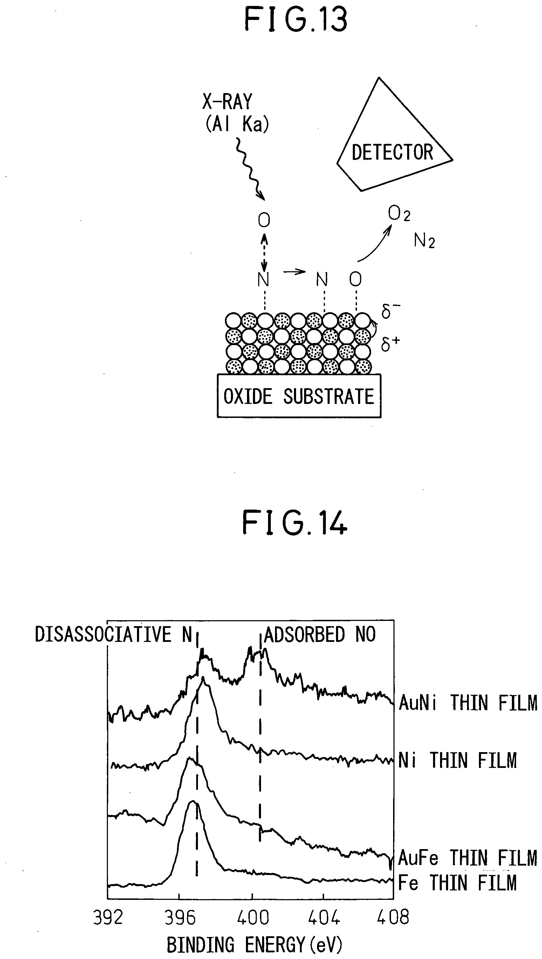

This AuNi bimetal thin film, as shown in FIG. 13, has been investigated by in situ XPS measurement, as shown in FIG. 14, and gives an N1s XPS spectrum showing NO disassociative adsorption characteristics that are different to those seen for an AuFe thin film.

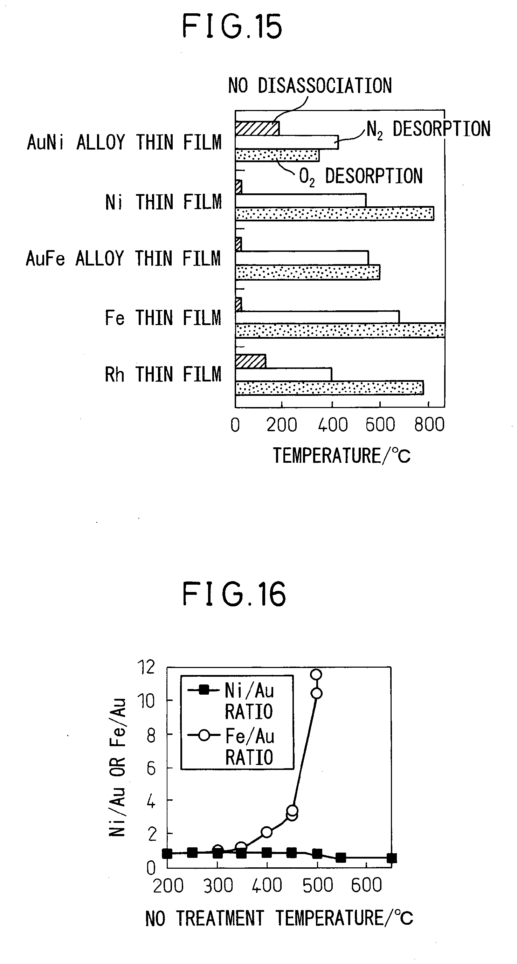

Referring to FIG. 15, it can be seen that, according to the AuNi bimetal thin film the presence of gold promotes N₂ desorption and O₂ desorption from nickel and results in a higher decomposition performance than Rh. The theory behind the effect by this AuNi bimetal thin film has not yet been fully elucidated, but the decomposition reaction of NO comprises the disassociative adsorption of NO and the subsequent desorption of N₂ and O₂. It is believed that the lower the N₂ and O₂ desorption temperatures, the higher the NO purification performance. In FIG. 15, the difficulty in desorbing N₂ and O₂ is probably the cause of the lower activity in all systems reported other than AuNi bimetal that is an example of the invention. With the conventional catalyst Rh, NO purification has been shown to be impossible in an oxidizing atmosphere. Instead, it is necessary to establish a reducing atmosphere to reduce the gas and to promote the removal of oxygen at a lower temperature than the NO purification temperature. In contrast to this, with an NOₓ purification catalyst that is used in an embodiment of the present invention, it is believed that the AuNi bimetal can provide activation points, whereby the N₂ and O₂ desorption temperatures fall, so NO purification becomes possible even at a temperature as low as about 400°C regardless of the atmosphere.

Furthermore, according to FIG. 16, the AuNi bimetal thin film-based NOₓ purification catalyst does not change in terms of the Ni/Au ratio of the bimetal thin film surface even if the NO treatment temperature is varied in the range of 200 to 650°C. These results show that the AuNi bimetal thin film-based NOₓ purification catalyst exhibits special properties as compared with the AuFe bimetal thin film-based NOₓ purification catalyst. This latter system greatly changes in Fe/Au ratio at an NO treatment temperature of 350°C or more. Meanwhile, an AuNi bimetal-based NOₓ purification catalyst can easily keep its surface constant.

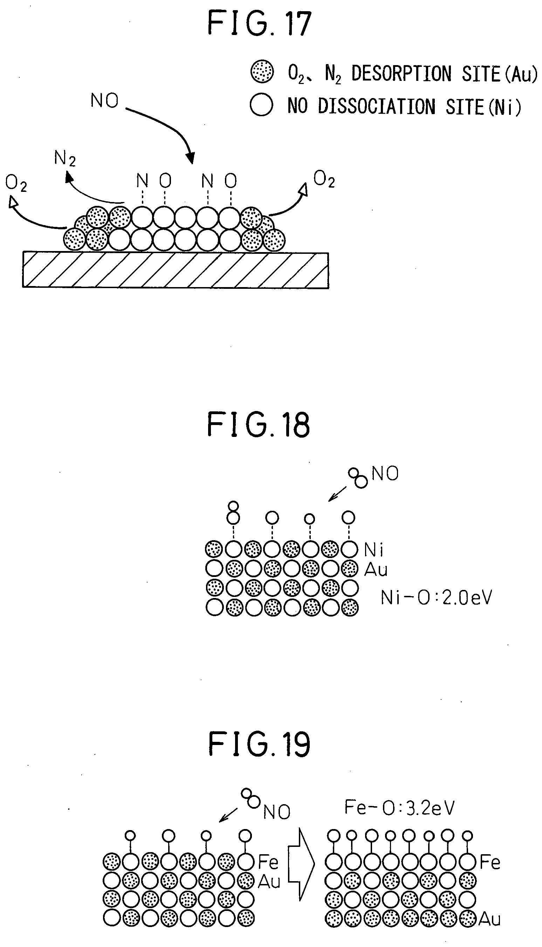

As shown in FIG. 17, it is considered that in the AuNi-based NOₓ purification catalyst the gold atoms serve as O₂ desorption and N₂ desorption sites, while the nickel atoms serve as NO decomposition sites.

As shown in FIG. 18, the AuNi-based NOₓ purification catalyst is structurally stable in structure, contains gold and nickel atoms resistant to movement, and exhibits a binding energy for oxygen adsorbed on the nickel sites (Ni-O) of 2.0eV.

As opposed to this, as shown in FIG. 19, the AuFe-based NOₓ purification catalyst has iron moving on the surface to form oxides and has a binding energy of the adsorbed oxygen with the iron of (Fe-O) of 3.2eV, or slightly larger than the binding energy of nickel and oxygen. That is, with an AuFe system, the binding force of the iron to the oxygen is strong and iron oxide easily forms. The iron oxide does not return to the original metal unless reduced by H₂ etc. However, this H₂ reduction reaction forms H₂O, the presence of which is detrimental to the catalytic activity of the alloy.

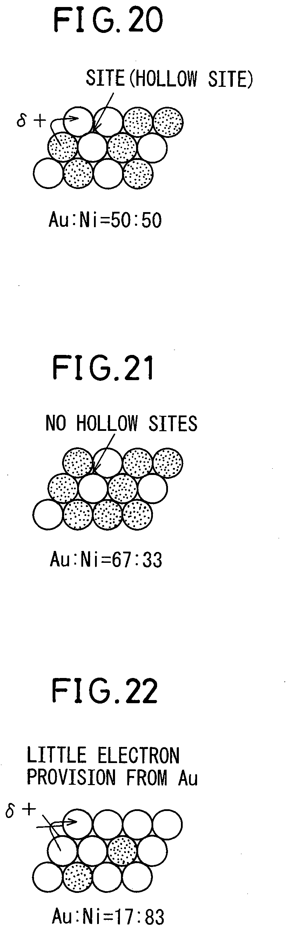

In the NOₓ purification catalyst of the present invention, as shown in FIG. 20 in the embodiment in which Au:Ni=50:50, the hollow sites surrounded by the three nickel metal atoms are believed to be NO disassociation sites.

Further, in the NOₓ purification catalyst outside of the scope of the present invention, as shown in FIG. 21 in the embodiment in which Au:Ni=67:37, there are no hollow sites surrounded by three Nickel metal atoms. However, it is believed that two types of metal atoms can form bridges that can constitute NO disassociation sites.

Further, in the NOₓ purification catalyst outside of the scope of the present invention, as shown in FIG. 22 in the embodiment in which Au:Ni=17:63, there is little electron donation from the gold to nickel, so compared with the previous two embodiments, the catalytic activity is not that high. However, the gold suppresses oxidation of the nickel, so there is the advantageous effect that the nickel becomes resistant to oxidation. It is believed that this can result in a good NOₓ purification performance in an oxidizing atmosphere.

. Based on the above the NOₓ purification catalyst used in the present invention must contain gold atoms and nickel atoms in a solid material, for example nanoparticles or a thin film, and in a state of close proximity. For this reason, the region where the atoms are in close proximity may include other metal atoms able to alloy with the two atoms. The NOₓ purification catalyst of the present invention can be obtained by, for example, using nanoparticles of the material forming the carrier as cores for obtaining nanoparticles in which the two metals are in close proximity.

As other metal atoms able to alloy with both the gold atoms and nickel atoms, for example, tungsten (W), which can improve the heat resistance of gold by alloying, may be mentioned.

Further, as the carrier, Al₂O₃, SiO₂, CeO₂, CeO₂-ZrO₂, and other metal oxides or carbon and silicon carbide may be mentioned.

When the NOₓ purification catalyst of the present invention is comprised of nanoparticles, it can be obtained by making the carrier support nanoparticles in which gold atoms and nickel atoms are included in a state of close proximity.

The nanoparticles in which gold atoms and nickel atoms are included in a state of close proximity can be obtained by, for example, reducing a mixture of gold salts and nickel salts in the presence of a protective polymer material using a reducing agent. The reducing agent used in, for example, a polyol, alcohol, NaBH₄, butyllithium, ammonia, borane and so on. The reduction reaction is performed in solution, preferably an aqueous solution, while under agitation.

At the end of the reduction reaction, the protective polymer material is separated and removed by, for example, centrifugal separation, solvent extraction, etc., and the obtained colloid in which the gold atoms and nickel atoms are present in a state of close proximity is uniformly mixed with the carrier so as to ensure that make the carrier supports nanoparticles which include gold atoms and nickel atoms in a state of close proximity.

The size of the Au-Ni particles with the gold atoms and nickel atoms contained in a state of close proximity can be 0.2 to 100 nm, preferably 2 to 10 nm.

As the gold salts, aurochloric acid (HAuCl₄), sodium tetrachloroaurate, potassium tetrachloroaurate, gold trisodium disulfite, potassium trisodium disulfite, etc. may be mentioned.

As the nickel salt, for example, nickel sulfate, nickel nitrate, nickel chloride, nickel bromide, nickel acetate, nickel hydroxide, etc. may be mentioned.

As the reducing polyols, ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol, 1,5-pentanediol, polyethylene glycol, etc. may be mentioned. To complete the reduction of the gold ions and nickel ions, at the final stage of reduction, for example, boron dimethylamide, boron diethylamide, sodium borohydrate, borane, or another boron compound can be added as a reducing agent.

As the protective polymer material, poly-N-vinylpyrrolidone (PVP), polyacrylamide, N-vinylpyrrolidone and acrylic acid copolymer, polyvinylpiridine, polyvinylmethylketone, poly(4-vinylphenol), oxazoline polymer, polyalkylene imine, and other polymers containing functional groups may be mentioned.

Further, when the NOₓ purification catalyst is in the form of a thin film, the outermost layer may be either a thin layer of nickel or a thin layer of gold. The NOₓ purification catalyst for example, can take the form of a thin film with an outermost layer of a 0.25 to 50 nm, in particular 1 to 5 nm, nickel thin film and an underlying layer that is a 0.25 to 50 nm gold thin film. Alternatively, it may take the form of a thin film with an outermost layer of a 0.25 to 10 nm, in particular 1 to 5 nm, gold thin film and an underlying layer that is a 10 to 50 nm or so nickel thin film.

In the thin film, the amounts of deposition of gold and nickel, the establishment of a reducing atmosphere, the heating temperature, and the heating time can be changed in order to alter the composition of the two elements in the outermost layer.

The thin film-like NOₓ purification catalyst is suitably heat treated to cause alloying of the gold and nickel.

The heating may for example be performed by using an infrared laser to heat the deposit to a temperature of between 350°C to 450°C.

Further, the heating may be radiant heating or electron beam heating. At the time of heating, the sample table on which the sample is placed is preferably one which was well heated in the past. That is, it is preferably one that will not release any highly reactive gas when heated.

The NOₓ purification catalyst of the present invention preferably takes the form of primary particles containing gold and nickel as main ingredients of the solid. The relative ratios of gold and nickel in the solid is in the range Au:Ni=40:60 - 60:40. If the composition of gold and nickel in the solid is outside that range, the NOₓ purification performance of the NOₓ purification catalyst tends to drop.

The NOₓ purification catalyst that is used in the present invention combines Au and Ni in close proximity and demonstrates a synergistic effect which gives a superior NOₓ purification performance. This performance cannot be matched using Au or Ni ingredients singly. In particular, the present invention demonstrates superior catalytic activity in NOₓ purification compared even to other alloys and Rh or other single precious metal particles.

In contrast to previous catalyst for the NOₓ purification catalyst that constitutes the present invention, the temperature required to raise the NOₓ purification activity to a significant level does not need to be high. Even in an oxidizing atmosphere, the present invention has an NOₓ purification ability, so the use of fuel for making the atmosphere a reducing atmosphere becomes unnecessary or can be greatly reduced.

Further, according to the NOₓ purification catalyst of the present invention, there is no need to lower the air-fuel ratio (A/F) in the engine. For example, during steady state operation at a high air-fuel ratio (for example, stoichiometric, where A/F=14.7), a gasoline engine can exhibit an A/F≥20, while for a diesel engine an A/F≥30 is possible.

### EXAMPLES

Below, examples of the present invention will be shown.

In the following examples, the obtained catalysts were evaluated by the methods of measurement shown below.

### 1. Measurement of O₂ Desorption Temperature and N₂ Desorption Temperature

Measurement method: Measurement of peak intensity by AES (Auger electron spectroscopy) while changing heating temperature
Measurement apparatus: KITANO SEIKI KCMA2002

### 2. Measurement of NO Disassociative Adsorption Temperature

Measurement method: Measurement of XPS (X-ray photoelectron spectroscopy) spectrum while changing heating temperature
Measurement apparatus: φESCA1600

### 3. Measurement of Bimetal Composition of Catalyst

Measurement method: Measurement of composition of bulk as a whole by XRD (X-ray diffraction)
Measurement apparatus: PHILIPS X'Pert MRD

### 4. Measurement of Particle Shape and Particle Size Distribution of Bimetal Nanoparticles

Measurement method 1: Measurement by TEM (transmission electron microscope)
TEM measurement apparatus: JEOL JEM-3011
Measurement method 2: Measurement by HRTEM (high resolution transmission electron microscope)
HRTEM Measurement apparatus: HITACHI HD2000

### 5. Measurement of Elemental Analysis of Alloy Nanoparticles

Measurement method: Measurement of composition by TEM-EDS (EDS: energy dispersive X-ray spectroscopy)
TEM-EDS measurement apparatus: HITACHI HD2000

### 6. Measurement of Ratio of Elements in Surface of Thin Film

Measurement method: Measurement of ratio of Au:M for example, M=nickel) by AES (Auger electron spectroscopy)
Measurement apparatus: KITANO SEIKI KCMA2002

### 7. Evaluation of NO Disassociative Adsorption

Measurement method: Measurement, for NOₓ purification catalyst, of binding energy by N1s XPS spectrum after adsorption of NO at 1 Langmuir at room temperature
Apparatus: φESCA 1600

### 8. Measurement of Catalytic Activity

Catalyst pellets were packed into a glass reaction tube and anchored by glass wool. A gas composed of 1000 ppm of NO and 1000 ppm of H₂ or CO and N₂ mixed in advance by balanced flow rates was run through the glass reaction tube. The gas temperature was raised at a temperature elevation rate of 20°C/min from 100°C to 500°C. The NO concentration was measured by an exhaust gas analyzer (HORIBA MEXA7100H) or MS (mass spectrometry).

Note that, when running a hot gas that does not include H₂, the measurement was conducted at 500°C after hydrogen reduction.

### Example 1

### 1) Synthesis of AuNi Nanoparticles

In a two-necked flask, 1.1 g of poly-n-vinylpyrrolidone (PVP) was added to 120 ml of anhydrous ethylene glycol. Into this mixture, 0.1404 g of nickel sulfate heptahydrate was added. The mixture was agitated at 80°C for 3 hours to obtain a solution (solution 1).

Separately, in a two-necked flask, 0.1809 g of NaAuCl₄ was added to 50 ml of distilled water. The mixture was strongly agitated for 2 hours or more to cause dissolution and obtain a bright orange colored solution (solution 2).

The solution 1 was cooled to 0°C. Solution 2 was poured into solution 1 and the two were uniformly agitated. The mixed solution was adjusted by a 1M NaOH solution (about 5 ml) to give a pH of 9 to 10. The mixed solution was heated in an oil bath to 100°C and was held there for 2 hours while being agitated. After this, the flask was removed from the oil bath and allowed to stand until the colloidal suspension had cooled to room temperature. To completely reduce all of the ions in the flask, sodium borohydride 0.038 g was added whilst stirring the mixture, then the suspension was allowed to stand for a while.

The produced nanoparticles were refined by treating a certain fraction including a predetermined amount of nanoparticles with a large amount of acetone. This caused, the PVP to be extracted to the acetone phase, and the metal nanoparticles to coagulate. The supernatant was transferred (decanted) or centrifuged to obtain the colloid. The acetone phase was removed, then the refined colloid was dispersed in pure ethanol by gentle stirring.

### 2. Supporting of AuNi Nanoparticles on a Carrier

In a 100 ml Schlenk flask, 1 g of the carrier (for example Al₂O₃) was inserted. The inside of the Schlenk flask was evacuated, then N₂ was run into it to clean the piping and completely remove the air. The concentration of the suspension of the colloid previously synthesized (both the refined colloid and remaining solution) was determined in advance, and a refined colloidal suspension containing Rh0.5wt% molar equivalents of gold and nickel metal was injected through a rubber septum into the Schlenk flask. The mixture was agitated at room temperature for 3 hours, then the solvent was removed in vacuo. After this, the remaining polymer protective material of the colloidal precipitate was removed and the result dried at 200 to 1000°C by heating under vacuum, air, H₂ atmosphere. The obtained catalyst powder was pressed to obtain pellets of approximately 2 mm size.

### 3. Evaluation of Catalyst

The obtained AuNi (50:50)/Al₂O₃ catalyst was measured for shape, particle size distribution, and elemental analysis of the bimetal particles by TEM and TEM-EDS.

TEM images are shown in FIG. 1A, FIG. 1B, and FIG. 1C, and a histogram representing of the size of the nanoparticles and showing the size distribution of 100 particles in HRTEM images is shown in FIG. 3. The mean size of the nanoparticles was 3.75 nm±0.70 nm.

Further, the TEM-EDS spectrum measured for an AuNi (50:50) colloid on a copper coated grid is shown in FIG. 5. From FIG. 5, it is shown that all individual particles include gold and nickel.

Furthermore, the obtained AuNi (50:50)/Al₂O₃ catalyst was measured for NO purification characteristics under the following gas flow conditions.

### Gas flow conditions

Gas composition: NO 1000 ppm, CO 1000 ppm, N₂ bal/10 liter
Flow rate: 500 ml/min, pellets: 150 mg,
Space velocity: 3.3 liters/min·g
Ni, base metal concentrations: each 0.0486 mmol/g-cat
The results are shown together with other results in FIG. 7, FIG. 8, and FIG. 9.

### Comparative Example 1

Except for not using the solution 1, the same procedure was followed as in Example 1 to obtain an Au/Al₂O₃ catalyst.

The obtained Au/Al₂O₃ catalyst was measured for NO purification characteristics in the same way as in Example 1. The results are shown together with other results in FIG. 7, FIG. 8, and FIG. 9.

### Comparative Example 2

### Preparation of Ni nanoparticles

4.400g of PVP was added to 120 ml of anhydrous ethylene glycol. 0.2811g of nickel(II) sulphate heptahydrate was added to this mixture (to give a *total* metal loading equivalent to that used in previous 50:50 AuNi preparations) and the resulting pale green system was stirred for 3 hours at 80°C. The solution was cooled to 0°C and 50 ml of 1,4-dioxane was introduced, whereupon the pH of the system was adjusted to 9-10 using 1M NaOH (ca. 5 ml). The mixture was stirred at reflux at 198°C for 3 hours before being allowed to cool to room temperature, giving a pale brown suspension. Purification and deposition were by a same route as Au-Ni nanoparticles.

### Supporting of Nickel Nanoparticles

In a 100 ml Schlenk flask, 1 g of the carrier (for example Al₂O₃) was inserted. The inside of the Schlenk flask was evacuated, then N₂ was used to purge the piping. The concentration of the suspension of the colloid previously synthesized (both the refined colloid and remaining solution) was determined in advance, and a refined colloidal suspension containing Rh0.5wt% molar equivalents of nickel metal was injected into the Schlenk flask. The mixture was agitated at room temperature for 3 hours, then the solvent was removed in vacuo. After this, the remaining protective material of the colloidal precipitate was removed and the resulting material was dried at 200 to 600°C by firing in a vacuum or in the air. The obtained catalyst powder was pressed to obtain Ni/Al₂O₃ catalyst pellets of approximately 2 mm size.

The obtained Ni/Al₂O₃ catalyst was measured in the same way as in Example 1 for NO purification characteristics. The results are shown together with other results in FIG. 7, FIG. 8, and FIG. 9. Further, the NO disassociative adsorption was evaluated. The results are shown together with other results in FIG. 10.

### Comparative Example 3

Except for separately using nickel sulfate heptahydrate and NaAuCl₄, the same procedure was followed as in Comparative Example 2 to cause metal to precipitate by evaporation of a gold and nickel mixed metal ion solution and thereby obtain (Au+Ni)mixture/Al₂O₃ catalyst pellets in which gold and nickel are not present in a state of close proximity.

The obtained catalyst was measured in the same way as in Example 1 for NO purification characteristics. The results are shown together with other results in FIG. 7, FIG. 8, and FIG. 9.

### Comparative Examples 4 to 8

Except for replacing the nickel sulfate heptahydrate in Example 1 with tungsten chloride (Comparative Example 4), rhenium chloride (Comparative Example 5), or manganese acetate (Comparative Example 6), or molybdenum acetate (Comparative Example 7) or using copper acetyl acetonate and further changing the amount of the substrate (Comparative Example 8), the same procedure was followed as in Example 1 to obtain an AuW (50:50)/Al₂O₃ catalyst, AuRe (50:50)/Al₂O₃ catalyst, AuMn (50:50)/Al₂O₃ catalyst, AuMo (50:50)/Al₂O₃ catalyst, or AuCu (Cu:5.9%)/Al₂O₃ catalyst.

The NO purification characteristics of the obtained catalysts were measured in the same way as in Example 1. The results are shown together with the results of the catalyst from Example 1 in FIG. 8.

### Examples 2 to 3 (not according to the invention)

Except for changing the ratio of gold and nickel from Au:Ni=50:50 to Au:Ni=25:75 (Example 2) and to Au:Ni=75:25, the same procedure was followed as in Example 1 to obtain an AuNi (25:75)/Al₂O₃ catalyst and an AuNi (75:25)/Al₂O₃ catalyst.

The obtained catalysts were measured for NO purification characteristics in the same way in Example 1. The results are shown together with other results in FIG. 9.

### Examples 4 (not according to the invention) to 5 and Reference Example 1

Except for changing the ratio of gold and nickel from Au:Ni=50:50 to Au:Ni=3:7 (Example 4) and to Au:Ni=6:4 (Example 5) and using iron acetate instead of nickel sulfate to change the composition from Au:Ni=50:50 to Au:Fe=6:4 (Reference Example 1), the same procedure was followed as in Example 1 to obtain an AuNi (3:7)/Al₂O₃ catalyst, AuNi (6:4)/Al₂O₃ catalyst, and AuFe (6:4)/Al₂O₃ catalyst.

The obtained catalysts were evaluated for NO disassociative adsorption. The results are shown together with other results in FIG. 10.

The results in FIG. 10 show that the NO disassociative adsorption of AuNi differs from that of AuFe.

### Example 6

Except for changing the carrier from Al₂O₃ to SiO₂, the same procedure was followed as in Example 1 to obtain an AuNi (50:50)/SiO₂ catalyst.

The obtained AuNi(50:50)/SiO₂ catalyst was measured for the shape and particle size distribution of the bimetal particles.

A TEM image is shown in FIG. 2A, a TEM image changed in scale is shown in FIG. 2B, and a dispersion histogram showing the size of the nanoparticles and revealing the distribution of 100 particles in strictly multiple HRTEM images is shown in FIG. 4.

Further, the TEM-EDS spectrum measured for an AuNi (50:50) colloid on a copper coated grid is shown in FIG. 6, wherein Au-Ni colloids are placed on a Cu coated grid, and Cu peaks come from the grid. From FIG. 6, it is evident that all individual particles include gold and nickel.

Furthermore, the obtained AuNi (50:50)/Al₂O₃ catalyst was measured for NO-H₂ catalytic activity under the following gas flow conditions.

### Gas flow conditions

Gas composition: NO 1000 ppm, H₂ 1000 ppm, N₂ bal/10 liters
Flow rate: 10 liters/min, pellets: 2 g,
Space velocity: 5 liters/min-g
Ni, base metal concentration: each 0.0486 mmol/g-cat

The obtained results are shown together with other results in FIG. 11.

### Comparative Example 9

Except for changing the carrier from Al₂O₃ to SiO₂, the same procedure was followed as in Comparative Example 1 to obtain an Au/SiO₂ catalyst.

The obtained catalyst was measured for NO-H₂ catalytic activity. The results are shown together with other results in FIG. 11.

### Comparative Example 10

Except for changing the carrier from Al₂O₃ to SiO₂, the same procedure was followed as in Comparative Example 2 to obtain an Ni/SiO₂ catalyst.

The obtained catalyst was measured for NO-H₂ catalytic activity. The results are shown together with other results in FIG. 11.

### Comparative Example 11

Except for using manganese sulfate instead of nickel sulfate, the same procedure was followed as in Example 6 to obtain an AuMn (50:50)/SiO₂ catalyst.

The obtained catalyst was measured for NO-H₂ catalytic activity. The results are shown together with other results in FIG. 11.

From FIG. 7, FIG. 8, FIG. 9, and FIG. 11, it is evident that the AuNi/carrier-based NOₓ purification catalysts that represent the embodiments of the present invention exhibit good NOₓ purification performance at a relatively low temperature and/or in an oxidizing atmosphere.

### Example 7 (not according to the invention)

As shown in the schematic view in FIG. 12, the following steps were used to form gold on an Al₂O₃ (sapphire) substrate, then to deposit nickel to form a thin film, then heat-treat this to prepare an NOₓ purification catalyst that takes the form of an AuNi bimetal thin film/Al₂O₃ substrate.
1) An ion sputter apparatus (HITACHI E101, energy 100eV, ion current 15 mA) is used to form a gold sputtered film on an Al₂O₃ (sapphire) substrate. The sputtering operation was performed for 2 minutes five times that is, for a total of 10 minutes to deposit a uniform gold film with a thickness of approximately 50 nm.
2) The deposited material was conveyed to the vacuum chamber of a PLD (pulsed laser deposition) apparatus provided with an X-ray photoelectron spectroscopy (XPS) device as shown in FIG. 12.
   This PLD and analysis means are in-situ. However, there is no need for them to be in-situ. The same may be conveyed with a single exposure to air if the pretreatment shown below is then performed immediately prior to analysis.
3) An excimer laser (LAMBDA PHYSIC, 25 to 29 kV, 1 to 10 Hz, KrF 3000 mbar) was used to fire a beam into the chamber such as to strike a nickel target and deposit a second ingredient (nickel) and to thereby form a uniform nickel film of several nm thickness.
4) Under a vacuum, an infrared laser was used to heat the deposited sample to 350°C to cause bimetalation and so obtain an NOₓ purification catalyst of an AuNi bimetal thin film/Al₂O₃ substrate.
   Next, the obtained catalyst was evaluated by the following processes.
5) 1 Langmuir (5.0x10⁻⁶ Pa, 44s/1 Langmuir, room temperature: 25°C) of NO gas was introduced to the chamber and the NO gas was adsorbed on the catalyst.
6) XPS apparatus (ΦESCA1600, Monochlo Al-Ka (1486.7eV), 350W, 14.0kV) was used to observe the N1s signal (at room temperature) and so to monitor NO disassociative adsorption, N₂ desorption, and O₂ desorption characteristics. The peak position could be used to discriminate between an NO adsorption state and an N/O disassociation state.

The NO disassociative adsorption, N₂ desorption, and O₂ desorption characteristics were measured. The results are shown together with other results in FIG. 14 and FIG. 15.

Further, the temperature-dependence of the NO treatment on the surface Ni/Au ratio of the alloy thin film was measured by NO treatment under the following conditions. The results of measurements are shown together in FIG. 16.

NO treatment conditions: NO was fed in at 5x10⁻⁶ Pa for 45 seconds, then the temperature was raised at a temperature elevation rate of 5°C/min.

### Comparative Examples 11 to 13

Except for depositing single metals on the substrates and not changing the thicknesses of the thin films, the same procedure was followed as in Example 7 in order to obtain an Ni thin film/Al₂O₃ substrate NOₓ purification catalyst (Comparative Example 11), a Fe thin film/Al₂O₃ substrate NOₓ purification catalyst (Comparative Example 12), and a Rh thin film/Al₂O₃ substrate NOₓ purification catalyst (Comparative Example 13).

The obtained catalysts were measured for NO disassociative adsorption, N₂ desorption, and O₂ desorption characteristics.

The obtained results are shown together with the other results in FIG. 14 and FIG. 15.

### Reference Example 2

Except that Fe substrate was used in place of Ni substrate, the same procedure was followed as in Example 7 to obtain an AuFe bimetal thin film/Al₂O₃ substrate NOₓ purification catalyst.

The obtained catalyst was measured for NO disassociative adsorption, N₂ desorption, and O₂ desorption characteristics. The obtained results are shown in FIG. 14 and FIG. 15.

Further, the temperature-dependence of the NO treatment on the surface Fe/Au ratio of the thin film was measured. The obtained results are shown together with other results in FIG. 16.

The results in FIG. 16 show that for an AuFe system, as the NO treatment temperature is raised above 400°C, the surface Fe/Au ratio rapidly increases. In comparison, for an AuNi system, the surface Ni/Au ratio remain constant at all temperature tested, demonstrating that the bimetal surface conditions can easily be kept constant in the range of 200 to 650°C.

Further, from the results of FIG. 14 and FIG. 15, when nickel and gold are present in close proximity in a solid comprised of a multilayer thin film, even if the surface is 100% nickel, heat treatment enables biametalation to occur. Subsequently, NO disassociative adsorption occurs at about 200°C or less, the temperatures of N₂ desorption and O₂ desorption both fall to about 425°C. Significant lowering of the O₂ desorption temperature relative to that of 700°C or more for an Rh thin film represents a remarkable achievement and clearly demonstrates the advantage of the present invention.

### Comparative Examples 14 to 17

The catalysts were synthesized according to the synthetic method described in Japanese Unexamined Patent Publication (Kokai) No. 10-216518. Their performances as the catalyst were compared by including the catalyst of the present invention. The synthetic method described in the above publication is the co-impregnation method (Au, Ni co-impregnation).

### Preparation of catalysts

### 1) Synthesis of catalyst component 1-1: Au/Al₂O₃, 1-2: Au/SiO₂

In a manner similar to Working Example 1 except that solution 1 described in the Example was not added, the powdery Au/Al₂O₃ or Au/SiO₂ catalyst was prepared.

### 2) Synthesis of catalyst component 2-1: Ni/Al₂O₃, 2-2: Ni/SiO₂

4.400 g of poly-n-vinyl pyrrolidone (PVP) was added to 120 ml of anhydrous ethylene glycol in a forked flask. 0.2811 g of nickel sulphate heptahydrate was added to this mixture at the same molar amount as the total moles of Au and Ni in Working Example 1, and the resulting mixture was stirred for 3 hours at 80°C. The mixture was cooled to 0°C in a cooling bath and 1,4-dioxane (50 ml) was introduced, and then stirred to homogeneity. The pH of the mixture was adjusted by adding about 5 ml of 1M NaOH. The mixture was heated to 198°C, and the temperature was maintained while stirring for 3 hours before being allowed to cool to room temperature, resulting in a pale brown suspension. Purification and deposition onto a carrier were carried out in the same way as in Working Example 1 to obtain a catalyst.

### 3) Synthesis of catalyst 3-1: Au+Ni/Al₂O₃, catalyst 3-2: Au+Ni/SiO₂

Nickel sulfate (or nickel acetate) and chlorauric acid of the same amounts as those used in Working Example 1 were dissolved in 100 ml of water. In a separate vessel, the mixed aqueous solution of nickel sulfate and chlorauric acid was added to a colloid suspension in which 50 g of carrier (Al₂O₃ or SiO₂) was introduced in 200 ml of water while stirring, and the mixture was allowed to stand for 2 hours. Then, the liquid was evaporated at 70-90°C, the residue was dried at 120°C for 15 hours, and calcined at 500°C for 2 hours. The resulting catalyst powder was subjected to pressure to obtain the pellets of about 2 mm.

### 4) Preparation of catalyst 4-1: Au+Ni/Al₂O₃, 4-2: Au+Ni/SiO₂

Each of the above catalyst component 1-1 and catalyst component 2-1, and catalyst component 1-2 and catalyst component 2-2 powders was mixed, respectively, in a mortar. The resulting catalyst powder was subjected to pressure to obtain pellets of about 2 mm.

### Evaluation of catalysts

In catalyst 3-1 (Comparative Example 14), catalyst 4-1 (Comparative Example 16) obtained as above and the catalyst obtained in Working Example 1, the method of Working Example 1 was followed to determine NO-purification characteristics except that only Comparative Example 14: Au+Ni/Al₂O₃ was subjected to a H₂ reduction treatment at 1000°C according to the method described in the above publication and a different measuring instrument was used. The catalyst obtained in Working Example 6 and catalyst 3-2 (Comparative Example 15): Au+Ni//SiO₂ were subjected to a H₂ reduction treatment at 1000°C according to the method described in the above publication, and the XRD spectrum was measured.

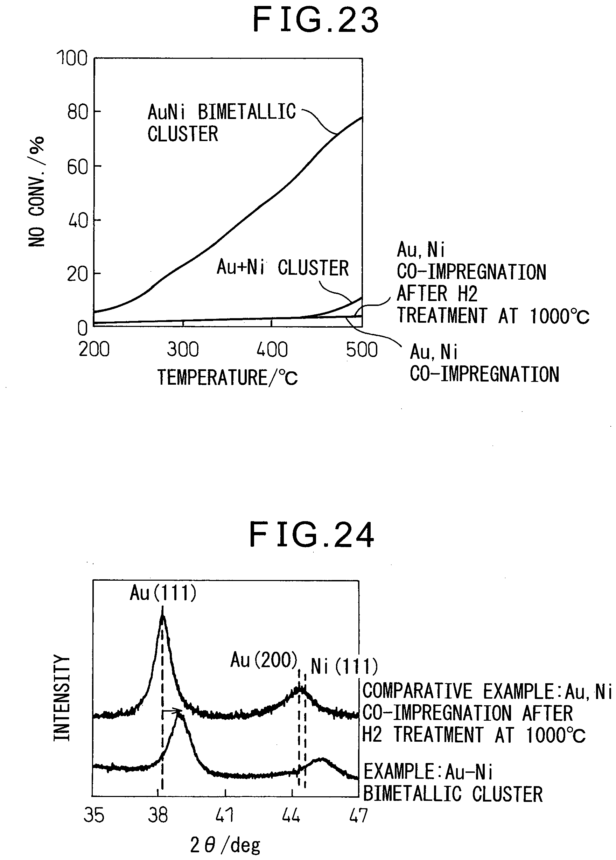

The results of evaluating NO-purification characteristics are collectively shown in Fig. 23, and the results of measuring the XRD spectrum are shown in Fig. 24.

Fig. 23 indicates that the NOₓ-purification catalyst of the present invention exhibits a high NO-purification performance whereas the Au, Ni-co-impregnation catalyst of Comparative Example 14 does not. One conceivable reason for this is that from Fig. 24 showing the XRD spectra of both catalysts, the Au, Ni-co-impregnation catalyst described in Japanese Unexamined Patent Publication (Kokai) No. 10-216518 does not exhibit a shift of the X-ray diffraction peak to the Ni(1111) peak, i.e., both metals (Au, Ni) are not in a state adjacent to each other.

According to the NOₓ purification catalyst that constitutes the present invention, from the viewpoint of resource depletion, gold can be used with nickel, which is present in the environment to about the same extent as copper. The temperature required for efficient NOₓ purification activity is lower than has been the case previously. Further, NOₓ purification activity can even be recorded in an oxidizing atmosphere, so use of fuel for making the atmosphere a reducing one becomes unnecessary or at least can be greatly decreased. There is no need, when operating under steady-state conditions, to make the air-fuel ratio (A/F) close to stoichiometric (A/F=14.7). Operation at a high air-fuel ratio (A/F) of, for example, theoretically, in the case a gasoline engine, an A/F=20 and, in the case of a diesel engine, an A/F=30, is possible.

## Claims

1. Use as a nitrogen oxide purification catalyst of a catalyst comprising particles of gold atoms and nickel atoms in a solid in a state of close proximity supported on a metal oxide carrier, wherein the particles have an average particle size of 1.5 to 5.5 nm, and wherein the ratio of metals in the particles is Au:Ni = 40:60 to 60:40 (at%).

## Patentansprüche

1. Verwendung eines Stickstoffoxid-Reinigungskatalysators eines Katalysators, umfassend Goldatom- und Nickelatomteilchen in einem Festkörper in einem Zustand nächster Nähe, die auf einem Metalloxidträger aufgebracht sind, wobei die Teilchen einen Durchschnittsteilchendurchmesser von 1,5 bis 5,5 nm aufweisen und wobei das Verhältnis von Metallen in den Teilchen Au:Ni = 40:60 bis 60:40 (in %) ist.

## Revendications

1. Utilisation en tant que catalyseur de purification d'oxydes d'azote d'un catalyseur comprenant des particules d'atomes d'or et d'atomes de nickel dans un solide dans un état de proximité immédiate supporté sur un support d'oxydes métalliques, les particules présentant une taille particulaire moyenne de 1,5 à 5,5 nm, et le rapport de métaux dans les particules étant Au/Ni = 40/60 à 60/40 (en %).
